# EUROPÄISCHE PATENTSCHRIFT

(11) **EP 3 627 111 B1**
(45) Veröffentlichungstag und Bekanntmachung des Hinweises auf die Patenterteilung: **04.10.2023**
(21) Anmeldenummer: 19192571.8
(22) Anmeldetag: 20.08.2019
(51) Int. Cl.: G01D 5/14, G01D 11/30

(54) **HALTER FÜR EINEN MAGNET, STELLARMATURPOSITIONSERFASSUNGSEINRICHTUNG UND STELLARMATUR**
HOLDER FOR A MAGNET, ACTUATOR POSITION DETECTION DEVICE AND ACTUATOR
SUPPORT POUR UN AIMANT, DISPOSITIF DE DÉTECTION DE POSITIONNEMENT DE VANNE DE RÉGLAGE ET VANNE DE RÉGLAGE

(30) Priorität: 19.09.2018 DE 202018105378 U
(43) Veröffentlichungstag der Anmeldung: 25.03.2020
(73) Patentinhaber: Samson Aktiengesellschaft, 60314 Frankfurt am Main (DE)
(72) Erfinder: Grasz, Matthias, 63762 Großostheim (DE)
(74) Vertreter: Schmid, Nils T.F.

(56) Entgegenhaltungen:
- EP-A2- 2 141 785
- DE-A1-102011 006 035
- DE-B3-102016 121 671
- FR-A1- 2 992 046
- US-A1- 2008 308 400

## Beschreibung

Die vorliegende Erfindung betrifft einen Halter für einen Magnet einer magnetempfindlichen Stellarmaturpositionserfassungseinrichtung einer Stellarmatur einer prozesstechnischen Anlage, wie einer chemischen Anlage, einer Lebensmittel verarbeitenden Anlage, eines Kraftwerks oder dergleichen. Ferner betrifft die vorliegende Erfindung eine Stellarmaturpositionserfassungseinrichtung für eine Stellarmatur einer prozesstechnischen Anlage. Des Weiteren ist durch die vorliegende Erfindung eine Stellarmatur zum Stellen einer Prozessfluidströmung in einer prozesstechnischen Anlage bereitgestellt.

Stellungsmelder mit einer Sensor-Magnet-Anordnung zum Erfassen der Position eines Stellglieds einer Armatur sind im Allgemeinen bekannt. Gattungsgemäße Stellungsmelder besitzen ein Gehäuse, in dem eine Welle drehbeweglich gelagert und drehfest mit einem Hebelarm verbunden ist. Der Hebelarm ist an die Stellarmatur gekoppelt, sodass eine Stellarmaturhubbewegung durch den Hebelarm in eine Wellenrotationsbewegung übertragen wird, die mittels der Sensor-Magnet-Anordnung erfasst wird. Anhand der erfassten Wellenrotationsbewegung kann auf eine Stellgliedposition geschlossen werden.

Im Stand der Technik wurde bereits herausgefunden, dass eine besonders hohe Genauigkeit beim Erfassen der Wellenrotationsbewegung mittels der Sensor-Magnet-Anordnung erzielt werden kann, wenn der magnetempfindliche Sensor etwa mittig und oberhalb des Magneten angeordnet ist.

Beispielweise geht aus US 5,055,781 ein magnetempfindlicher Drehwinkelsensor zum Erfassen einer Stellventilposition hervor. Ein Magnet, der einem magnetempfindlichen Sensor zugeordnet und zugewandt ist, ist direkt auf einer Stirnfläche der Welle befestigt. Der Magnet ist ferner mittels einer Kunststoffummantelung umspritzt, sodass eine unlösbare Verbindung zwischen Magnet und Welle einhergeht. Daher ergibt sich eine nachteilige Montage-/Demontagesituation, weil insbesondere im Falle einer Wartung der Magnet, die Welle und die Kunststoffummantelung nur als Einheit ausgetauscht werden können.

FR 2992046 A1 betrifft ein Flüssigkeitsströmungsventil, wie ein Abgasrückführventil, für einen Kraftfahrzeug-Dieselmotor, mit einer Steuerwelle zur Steuerung der Klappe zum Verschliessen der Leitung und einem Antriebselement für die rotierende Steuerwelle, wobei das Antriebselement auf die Steuerwelle aufgegossen ist.

DE 102011006035 A1 betrifft einen Weggeber mit einer zugehörigen Pedaleinheit.

Die Erfinder der vorliegenden Erfindung haben außerdem herausgefunden, dass bei bekannten Stellungsmelder-Lösungen ein gewisses Spiel und/oder eine gewisse Verzögerung zwischen Stellarmaturhubbewegung und Wellenrotationsbewegung vorliegt, welche sich zum Einen nachteilig auf die Reaktionsfähigkeit des Stellungsreglers und zum Anderen nachteilig auf die Genauigkeit des Stellungsmelders auswirkt.

Es ist daher Aufgabe der vorliegenden Erfindung, die Nachteile aus dem bekannten Stand der Technik zu verbessern, insbesondere eine Stellarmaturpositionserfassungseinrichtung bereitzustellen, bei der die Positionserfassung deutlich genauer und mit möglichst geringer Verzögerung gewährleistet ist. Ferner ist es Aufgabe der vorliegenden Erfindung, einen Halter für einen Magnet einer derartigen Stellarmaturpositionserfassungseinrichtung bereitzustellen, der ein möglichst genaues und verzögerungsfreies Erfassen der Stellarmaturposition sowie eine möglichst einfache Montage/Demontage gewährleistet und insbesondere weitere Funktionen innerhalb der Stellarmaturpositionserfassungseinrichtung erfüllt.

Die Aufgabe wird durch die Gegenstände der unabhängigen Ansprüche 1,10 und 15 gelöst.

Gemäß einem ersten Aspekt der vorliegenden Erfindung ist ein Halter für einen Magnet einer magnetempfindlichen Stellarmaturpositionserfassungseinrichtung einer Stellarmatur einer prozesstechnischen Anlage, wie einer chemischen Anlage, einer Lebensmittel verarbeitenden Anlage, eines Kraftwerks oder dergleichen, bereitgestellt.

Die magnetempfindliche Stellarmaturpositionserfassungseinrichtung kann beispielsweise auf dem Funktionsprinzip der Messbarkeit der Veränderung magnetischer Felder beruhen. Die Stellarmaturpositionserfassungseinrichtung weist eine drehbeweglich in einem Gehäuse der Stellarmaturpositionserfassungseinrichtung gelagerte Welle auf. Die Welle definiert eine Drehachse, die sich parallel zu einer sich an dem Gehäuse abstützenden Drehfeder erstreckt. Außerdem weist die Stellarmaturpositionserfassungseinrichtung einen drehfest mit der Welle verbundenen Hebelarm auf, der derart an die Stellarmatur gekoppelt ist, dass eine Stellarmaturhubbewegung durch den Hebelarm in eine Wellenrotationsbewegung übertragbar ist. Ein an unterschiedlichen Stellen an dem Hebelarm positionierbarer Stift kooperiert mit einer an der Stellarmatur befestigten Kulisse und übersetzt die Hubbewegung dadurch in eine Drehbewegung. Es sei klar, dass über unterschiedliche Hebelarmlängen und über die unterschiedlichen Positionen des Stiftes an dem Hebelarm unterschiedliche Hubamplituden abgegriffen werden können. Der Stift ist dabei beispielsweise in einem in der Kulisse ausgebildeten Langloch geführt, wobei beispielsweise auch eine Kante zum Führen des Stiftes ausreichend ist. Des Weiteren können zwischen dem Hebelarm und der Kulisse Andrückrollen derart angeordnet sein, dass beim Übersetzen einer Stellarmaturhubbewegung in eine Wellendrehbewegung eine Relativbewegung zwischen einem Kontaktpunkt des Hebelarms und der Kulisse einhergeht, sodass die Andrückrollen an der Kulisse abrollen können, um eine geführte, vorzugsweise verschleißfreie, Relativbewegung zu erlauben. An dem Gehäuse der Stellarmaturpositionserfassungseinrichtung kann ferner ein magnetempfindlicher Drehwinkelsensor zum Erfassen der Wellenrotationsbewegung angeordnet sein, wobei insbesondere der magnetempfindliche Drehwinkelsensor derart dem Magnet zugeordnet ist, dass er bei einer Wellenrotationsbewegung eine Änderung des Magnetfeldes detektiert. Anhand dieser Änderung kann auf die Wellenrotationsbewegung und damit auf die Stellarmaturhubbewegung rückgeschlossen werden, woraus die Stellarmaturposition abgeleitet werden kann.

Der erfindungsgemäße Halter umfasst eine Aufnahme zum insbesondere verklemmenden Halten des Magneten. Das Verklemmen des Magneten hat den Vorteil einer einfachen und schnellen Montage. Ferner werden keine zusätzlichen Befestigungselemente benötigt, wobei es auch denkbar ist, zusätzliche Befestigungsteile vorzusehen. Beispielweise kann der Magnet innerhalb der Aufnahme verklebt oder vergossen sein. Bei dem Magneten kann es sich beispielsweise um einen langgezogenen Stabmagnet, vorzugsweise Permanentmagnet, handeln. Beispielweise kann der Magnet vollständig in der Aufnahme aufnehmbar sein. Ferner kann die Aufnahme derart dimensioniert sein, dass diese den Magnet wenigstens teilweise, insbesondere vollständig, umgreift. Ferner ist es denkbar, dass der Magnet, insbesondere Stabmagnet, an wenigstens einem distalen Ende vorzugsweise für etwa ¼ bis ½ der vollständigen Längserstreckung des Magneten von der Aufnahme eingefasst ist. Insbesondere schließt der Magnet in einer zur Längserstreckung des Magneten querliegenden, insbesondere senkrechten, Richtung bündig mit der Aufnahme ab, sodass der Magnet insbesondere nicht über die Aufnahme hervorsteht.

Der Halter umfasst auch einen mit der Aufnahme verbundenen, insbesondere aus einem Stück mit dieser hergestellten, Befestigungsabschnitt zum drehfesten Befestigen des Halters an der Welle. Der Halter ist demnach mittels des Befestigungsabschnitts derart an der Welle befestigt, dass eine Wellenrotationsbewegung unmittelbar in eine Halterrotationsbewegung übertragen wird. Mit anderen Worten dreht sich der Halter mit der Welle in Folge einer Stellarmaturhubbewegung mit. Beispielsweise ist der Befestigungsabschnitt derart dimensioniert, dass der Halter in Richtung der Wellen-Drehachse auf die Welle montiert werden kann und der Befestigungsabschnitt zur Befestigung des Halters an der Welle wenigstens abschnittsweise mit Umfangs-/Mantelflächen der Welle in Kontakt ist. Ferner können Verstärkungs- und/oder Sicherungsteile zur Befestigung des Halters an der Welle vorhanden sein, die vorzugsweise in Richtung der Wellen-Drehachse auf die Welle montiert werden können.

Erfindungsgemäß umfasst der Halter einen mit der Aufnahme und dem Befestigungsabschnitt verbundenen, insbesondere aus einem Stück mit der Aufnahme und dem Befestigungsabschnitt hergestellten, Stützabschnitt. Der Stützabschnitt dient insbesondere zum verhakenden Abstützen der Drehfeder, welche ebenfalls am Gehäuse der Stellarmaturpositionserfassungseinrichtung abgestützt ist, um eine Drehfederkraft bei einer Wellenrotationsbewegung aufzubauen. Mittels des erfindungsgemäßen Halters kann eine deutlich genauere Positionserfassung bei möglichst geringer Verzögerung erzielt werden, da mittels der durch die Drehfeder bereitgestellten Drehfederkraft eine Federvorspannung der Welle einhergeht. Dadurch lässt sich ein Spiel zwischen Stellarmaturhubbewegung und Wellenrotationsbewegung vermeiden. Hubbewegungen werden direkt in Rotationsbewegungen übersetzt. Gattungsgemäße Stellarmaturen besitzen in der Regel zwei Extremstellungen, nämlich eine vollständig geöffnete Stellung zur Ermöglichung eines maximalen Durchflusses und eine vollständig geschlossene Stellung zur Verhinderung eines Durchflusses. Beispielsweise ist es denkbar, dass die Federvorspannung derart eingestellt ist, dass die Drehfeder die Welle so positioniert, dass die Stellarmatur in die Schließstellung gedrückt wird. Dies ist insbesondere von Vorteil für sicherheitsrelevante Anwendungen, bei denen beispielsweise eine Notabschaltung der Stellarmatur dazu führen soll, dass kein Durchfluss mehr bereitgestellt ist, sodass bei einer Notabschaltung die Drehfeder die Stellarmatur in die Dicht-Schließstellung bewegt. Des Weiteren ist es denkbar, dass die Federvorspannung derart eingestellt ist, dass sich die Drehfederkraft erst beim Verlassen der Stellarmatur-Schließstellung kontinuierlich aufbaut. Die vorliegende Erfindung betrifft auch den umgekehrten Fall, dass die Drehfeder mittels der Drehfederkraft die Stellarmatur in die vollständig geöffnete Stellung vorspannt. Außerdem erlaubt der erfindungsgemäße Halter ein einfaches Montieren und Demontieren des Magneten in dem Halter sowie des Halters auf die Welle. Durch die erfindungsgemäße Abstützung der Drehfeder einerseits an dem Gehäuse und andererseits an dem Halter selbst ergibt sich eine besonders vereinfachte Ausführung einer Stellarmaturpositionserfassungseinrichtung, da der Magnethalter nicht mehr nur die Funktion des Haltens des Magneten erfüllt, sondern zusätzlich zur Drehmomentabstützung der Drehfeder und zur Führung der Drehfeder dient.

Gemäß einer beispielhaften Ausführung des erfindungsgemäßen Halters sind der Magnet und die Aufnahme formkomplementär zueinander ausgebildet. Für den Fall, dass der Magnet als Stabmagnet realisiert ist, besitzt die Aufnahme demnach ebenfalls eine langgezogene Gestalt oder wenigstens zwei Aufnahmeabschnitte, in denen jeweils ein Bereich des Stabmagneten gehalten ist. Vorzugsweise ist der Magnet form-, kraft- und/oder stoffschlüssig in der Aufnahme gehalten. Gemäß einer besonders einfach zu realisierenden Ausführung ist der Magnet kraftschlüssig in der Aufnahme gehalten, wobei insbesondere der Magnet derart bezüglich der Aufnahme überdimensioniert ist, dass sich eine Presspassung zwischen Magnet und Aufnahme einstellt und/oder der Magnet vorzugsweise ausschließlich mittels der zwischen Magnet und Aufnahme resultierenden Haftreibungskraft in der Aufnahme gehalten ist.

Bei einer beispielhaften Ausführung des erfindungsgemäßen Halters ist der Magnet derart in der Aufnahme gehalten bzw. aufnehmbar, dass die Wellen-Drehachse vorzugsweise mittig durch den Magneten verläuft und/oder der Magnet in Richtung der Wellen-Drehachse in einem Abstand zu der Welle, insbesondere in einem Abstand zu einer dem Magnet zugewandten Stirnfläche der Welle, angeordnet ist. Der Abstand kann dabei gering dimensioniert sein, um einen Bauraum insbesondere in Richtung der Drehachse gering zu halten. Beispielsweise liegt der Abstand im Bereich weniger Millimeter. Gemäß einer Weiterbildung des erfindungsgemäßen Halters ist der Magnet derart bemessen, dass er in wenigstens einer zur Drehachse senkrechten Richtung über eine Querschnittsabmessung der Welle hervorsteht. Des Weiteren kann eine Querschnittsabmessung der Welle in einer anderen zur Drehachse senkrechten Richtung größer als eine Querschnittsabmessung des Magneten dimensioniert sein.

Gemäß einer weiteren beispielhaften Ausführung des erfindungsgemäßen Halters ist der Magnet demontierbar in der Aufnahme gehalten bzw. aufnehmbar. Dies wirkt sich insbesondere bei der Demontage, beispielsweise bei Wartungsintervallen, vorteilhaft aus. Vorzugsweise ist der Magnet mittels einer Verrastung in der Aufnahme gehalten. Dazu kann beispielsweise eine kraft-, stoff- und/oder formschlüssige Befestigung des Magneten in der Montage erzielt werden. Gemäß einer Weiterbildung des erfindungsgemäßen Halters weist der Magnet wenigstens ein Verastungselement, wie einen Rastvorsprung und/oder eine Rastaussparung auf. Des Weiteren kann die Aufnahme wenigstens ein Verrastungselement, wie einen Rastvorsprung und/oder eine Rastaussparung, zum verrastenden Befestigen des Magneten in der Aufnahme besitzen. Vorzugsweise ist das wenigstens eine Verrastungselement der Aufnahme dem wenigstens einen Verrastungselement des Magneten zugeordnet, insbesondere derart zugeordnet, dass beim Einsetzen des Magneten in die Aufnahme die jeweiligen Verrastungselemente ineinander einrasten, um den Magneten in der Aufnahme zu befestigen. Des Weiteren kann ein Lösemechanismus zum Lösen der Verrastung und zum Gewährleisten einer Demontage des Halters aus der Aufnahme vorgesehen sein. Bei Betätigung des Lösemechanismus kann der Verrastungseingriff zwischen entsprechenden, einander zugeordneten Verrastungselementen gelöst werden.

In einer weiteren beispielhaften Ausführung des erfindungsgemäßen Halters ist der Befestigungsabschnitt durch einen umlaufenden, sich in einem Winkel, vorzugsweise im Bereich von 85° bis 95°, insbesondere 90°, zur Drehachse erstreckenden Flansch gebildet. Der Flansch kann beispielsweise als Ringflansch dimensioniert sein. Beispielweise besitzt der Ringflansch eine mittig angeordnete Durchgangsöffnung, die im montierten Zustand des Halters an der Welle koaxial mit der Wellen-Drehachse liegt und über die der Halter, insbesondere der Befestigungsabschnitt, in Richtung der Drehachse auf die Welle aufgeschoben werden kann. Vorzugsweise ist der Befestigungsabschnitt derart bezüglich eines Wellendurchmessers formangepasst, dass der Befestigungsabschnitt form- und/oder kraftschlüssig, insbesondere mittels einer Presspassung, an der Welle befestigt ist. Mit anderen Worten kann beispielsweise ein Innendurchmesser des Befestigungsabschnitts, insbesondere der Durchgangsöffnung, geringfügig kleiner dimensioniert sein als ein Außendurchmesser der Welle.

Gemäß einer weiteren beispielhaften Ausführung kann der Halter vorzugsweise zusätzlich mittels eines Befestigungsteils, wie eines Sicherungsrings, einer Schraube, einer aufzubringenden Schweißnaht oder dergleichen, mit der Welle verbunden sein. Insbesondere ist das Befestigungsteil dazu vorgesehen, den Befestigungsabschnitt drehmomentübertragungsgemäß mit der Welle zu verbinden. Dies bedeutet, dass eine Wellenrotationsbewegung direkt in eine Halterrotationsbewegung übersetzt wird.

In einer beispielhaften Ausführung des erfindungsgemäßen Halters ist der Stützabschnitt derart geformt, dass er von einem insbesondere haken- oder schlaufenförmigen Ende der Drehfeder umgreifbar ist. Insbesondere weist der Stützabschnitt einen Vorsprung und/oder eine Aussparung auf, den/die das Ende der Drehfeder umgreifen kann und an dem/an der sich das Drehfederende abstützen kann, um eine Drehfederkraft bei einer Wellenrotationsbewegung aufzubauen. Dadurch ist eine einfache konstruktive Lösung bereitgestellt, die ebenso eine einfach umzusetzende Montage der Drehfeder bzw. des Halters erlaubt. Eine Haken- oder Schlaufenabmessung des Drehfederendes und eine Abmessung des Vorsprungs/der Aussparung des Halters sind dabei vorzugsweise aufeinander abgestimmt.

Gemäß einer Weiterbildung des erfindungsgemäßen Halters besitzt der Stützabschnitt einen sich im Wesentlichen in Richtung der Drehachse erstreckenden, vorzugsweise umlaufenden, Führungsschenkel zum Abstützen wenigstens eines Bereichs der Drehfeder. Durch die Führungsschenkel ist die Drehfeder wenigstens bereichsweise in Richtung der Drehachse vorzugsweise beim Aufbauen der Drehfederkraft geführt. Insbesondere liegt die Drehfeder wenigstens bereichsweise in Richtung der Drehachse an dem Führungsschenkel an, sodass die Führungsschenkel einen Anschlag, vorzugsweis einen Radialanschlag, für die Drehfeder bereitstellen.

In einer weiteren beispielhaften Ausführung ist der Halter aus Kunststoff vorzugsweise aus einem Stück, insbesondere mittels eines Spritzgussverfahrens, hergestellt. Alternativ kann der Halter aus weiteren geeigneten nicht magnetischen, vorzugsweise leichten, Materialien hergestellt sein.

Gemäß einem weiteren Aspekt der vorliegenden Erfindung ist eine Stellarmaturpositionserfassungseinrichtung für eine Stellarmatur einer prozesstechnischen Anlage, wie einer chemischen Anlage, einer Lebensmittel verarbeitenden Anlage, eines Kraftwerks oder dergleichen, bereitgestellt. Diese dient dazu, eine Stellarmaturposition/-stellung an einer beliebigen Position, d. h. an einer beliebigen Komponente, der Stellarmatur abzugreifen.

Die Stellarmaturpositionserfassungseinrichtung besitzt ein Gehäuse. Das Gehäuse kann beispielsweise mehrteilig, insbesondere zweiteilig, ausgebildet sein und ein Basisteil und ein daran zu montierendes Deckelteil umfassen. Ferner umfasst die Stellarmaturpositionserfassungseinrichtung eine drehbeweglich in dem Gehäuse, vorzugsweise in dem Basisteil, gelagerte Welle, die eine Drehachse definiert.

Erfindungsgemäß weist die Stellarmaturpositionserfassungseinrichtung einen Halter für einen Magnet auf, wobei der Halter vorzugsweise entsprechend der in Bezug auf den ersten erfindungsgemäßen Aspekt beschriebenen beispielhaften Ausführungen ausgestaltet ist. Demnach sind die obigen Ausführungen in Bezug auf den ersten erfindungsgemäßen Aspekt, in dem ein erfindungsgemäßer Halter für einen Magnet beschrieben wurde, in analoger Weise auf den zweiten erfindungsgemäßen Aspekt übertragbar. In dem Halter ist ein Magnet vorzugsweise verklemmend gehalten. Das Verklemmen des Magneten hat den Vorteil einer einfachen und schnellen Montage. Ferner werden keine zusätzlichen Befestigungselemente benötigt, wobei es auch denkbar ist, zusätzliche Befestigungsteile vorzusehen. Bei dem Magneten kann es sich beispielsweise um einen langgezogenen Stabmagnet, vorzugsweise Permanentmagnet, handeln. Eine parallel zu der Wellen-Drehachse orientierte Drehfeder stützt sich einerseits an dem Gehäuse und andererseits an dem Halter insbesondere verhakend ab. Mittels der erfindungsgemäßen Stellarmaturpositionserfassungseinrichtung kann eine deutlich genauere Positionserfassung bei möglichst geringer Verzögerung erzielt werden, da mittels der durch die Drehfeder bereitgestellten Drehfederkraft eine Federvorspannung der Welle einhergeht, wodurch ein spielfreies Abgreifen der Stellarmaturposition möglich ist. Durch die erfindungsgemäße Abstützung der Drehfeder einerseits an dem Gehäuse und andererseits an dem Halter selbst ergibt sich eine besonders vereinfachte Ausführung einer Stellarmaturpositionserfassungseinrichtung, da der Magnethalter nicht mehr nur die Funktion des Haltens des Magneten erfüllt, sondern zusätzlich zur Drehmomentabstützung der Drehfeder und zur Führung der Drehfeder dient.

Erfindungsgemäß umfasst die Stellarmaturpositionserfassungseinrichtung einen drehfest mit der Welle verbundenen Hebelarm, der derart an die Stellarmatur gekoppelt ist, dass eine Stellarmaturhubbewegung durch den Hebelarm in eine Wellenrotationsbewegung übertragbar ist. Ein an unterschiedlichen Stellen an dem Hebelarm positionierbarer Stift kooperiert mit einer an der Stellarmatur befestigten Kulisse und übersetzt die Hubbewegung dadurch in eine Drehbewegung. Es sei klar, dass über unterschiedliche Hebelarmlängen und über die unterschiedlichen Positionen des Stiftes an dem Hebelarm unterschiedliche Hubamplituden abgegriffen werden können. Der Stift ist dabei beispielsweise in einem in der Kulisse ausgebildeten Langloch geführt, wobei beispielsweise auch eine Kante zum Führen des Stiftes ausreichend ist. Des Weiteren können zwischen dem Hebelarm und der Kulisse Andrückrollen derart angeordnet sein, dass beim Übersetzen einer Stellarmaturhubbewegung in eine Wellendrehbewegung eine Relativbewegung zwischen einem Kontaktpunkt des Hebelarms und der Kulisse einhergeht, sodass die Andrückrollen an der Kulisse abrollen können, um eine geführte, vorzugsweise verschleißfreie, Relativbewegung zu erlauben.

Ferner kann die erfindungsgemäße Stellarmaturpositionserfassungseinrichtung einen an dem Gehäuse angeordneten magnetempfindlichen Drehwinkelsensor, wie ein Encoder, zum Erfassen der Wellenrotationsbewegung besitzen.

Gemäß einer beispielhaften Ausführung der erfindungsgemäßen Stellarmaturpositionserfassungseinrichtung ist der magnetempfindliche Drehwinkelsensor derart dem Magnet zugeordnet ist, dass er bei einer Wellenrotationsbewegung eine Änderung des Magnetfeldes detektiert. Anhand dieser Änderung kann auf die Wellenrotationsbewegung und damit auf die Stellarmaturhubbewegung rückgeschlossen werden, woraus die Stellarmaturposition abgeleitet werden kann.

Bei einer beispielhaften Ausführung der erfindungsgemäßen Stellarmaturpositionserfassungseinrichtung ist der Magnet derart in dem Halter gehalten, dass die Wellen-Drehachse vorzugsweise mittig durch den Magneten verläuft und/oder der Magnet in Richtung der Wellen-Drehachse in einem Abstand zu der Welle, insbesondere in einem Abstand zu einer dem Magnet zugewandten Stirnfläche der Welle, angeordnet ist. Der Abstand kann dabei gering dimensioniert sein, um einen Bauraum insbesondere in Richtung der Drehachse gering zu halten. Beispielsweise liegt der Abstand im Bereich weniger Zentimeter. Gemäß einer Weiterbildung der erfindungsgemäßen Stellarmaturpositionserfassungseinrichtung ist der Magnet derart bemessen, dass er in wenigstens einer zur Drehachse senkrechten Richtung über eine Querschnittsabmessung der Welle hervorsteht. Des Weiteren kann eine Querschnittsabmessung der Welle in einer anderen zur Drehachse senkrechten Richtung größer als eine Querschnittsabmessung des Magneten dimensioniert sein. Ferner kann eine Mittelachse des magnetempfindlichen Drehwinkelsensors und eine Mittelachse des Magneten zueinander parallel, vorzugsweise koaxial, orientiert sein.

In einer weiteren beispielhaften Ausführung der erfindungsgemäßen Stellarmaturpositionserfassungseinrichtung weist die Drehfeder, welche beispielsweise eine Torsionsfeder, vorzugsweise Schraubenfeder, ist, wenigstens ein haken- oder schlaufenförmiges Ende auf. Des Weiteren kann in dem Halter und/oder dem Gehäuse jeweils wenigstens ein Vorsprung und/oder eine Aussparung ausgebildet sein. Vorzugsweise stützt sich die Drehfederachse mit den Drehfederenden derart an dem Gehäuse und dem Halter ab, dass das wenigstens eine haken- oder schlaufenförmige Ende den wenigstens einen Vorsprung und/oder die wenigstens eine Aussparung in dem Halter und/oder dem Gehäuse umgreift, Wellenrotationsbewegung aufzubauen. Dadurch ist eine einfache konstruktive Lösung der Stellarmaturpositionserfassungseinrichtung bereitgestellt, die ebenso eine einfach umzusetzende Montage der Drehfeder bzw. des Halters erlaubt. Eine Haken- oder Schlaufenabmessung des Drehfederendes und eine Abmessung des Vorsprungs/der Aussparung des Halters und/oder des Gehäuses sind dabei aufeinander abgestimmt.

Gemäß einem weiteren Aspekt der vorliegenden Erfindung ist eine Stellarmatur zum Stellen einer Prozessfluidströmung in einer prozesstechnischen Anlage, wie einer chemischen Anlage, einer Lebensmittel verarbeitenden Anlage, eines Kraftwerks oder dergleichen bereitgestellt. Die erfindungsgemäße Stellarmatur umfasst dabei eine gemäß dem zweiten erfindungsgemäßen Aspekt der vorliegenden Erfindung ausgebildete Stellarmaturpositionserfassungseinrichtung, die vorzugsweise einen gemäß dem ersten erfindungsgemäßen Aspekt der vorliegenden Erfindung ausgebildeten Halter für einen Magnet umfasst. Demnach sind die obigen Ausführungen in Bezug auf den ersten und zweiten erfindungsgemäßen Aspekt, in denen ein erfindungsgemäßer Halter für einen Magnet und eine erfindungsgemäße Stellarmaturpositionserfassungseinrichtung beschrieben wurden, in analoger Weise auf den dritten erfindungsgemäßen Aspekt übertragbar.

Bevorzugte Ausführungen sind in den Unteransprüchen gegeben.

Im Folgenden werden weitere Eigenschaften, Merkmale und Vorteile der Erfindung mittels Beschreibung bevorzugter Ausführungen der Erfindung anhand der beiliegenden beispielhaften Zeichnungen deutlich, in denen zeigen:
- Fig. 1: eine Querschnittsansicht einer erfindungsgemäßen Stellarmaturpositionserfassungseinrichtung;
- Fig. 2: eine perspektivische Ansicht eines erfindungsgemäßen Halters, in dem ein Magnet aufgenommen ist und der eine Drehfeder abstützt, mit einem Hebelarm;
- Fig. 3: eine schematische Querschnittsansicht einer erfindungsgemäßen Stellarmatur in einer ersten Stellarmaturstellung;
- Fig. 4: eine schematische Querschnittsansicht der erfindungsgemäßen Stellarmatur gemäß Fig. 3 in einer weiteren Stellarmaturposition; und
- Fig. 5: eine Draufsicht auf einen erfindungsgemäßen Halter, in dem ein Magnet aufgenommen ist und der eine Drehfeder abstützt, welche sich ebenfalls an einem Gehäuse einer Stellarmaturpositionserfassungseinrichtung abstützt.

In der folgenden Beschreibung beispielhafter erfindungsgemäßer Ausgestaltungen ist ein erfindungsgemäßer Halter für einen Magnet im Allgemeinen mit der Bezugsziffer 1 und eine erfindungsgemäße Stellarmaturpositionserfassungseinrichtung im Allgemeinen mit der Bezugsziffer 3 versehen.

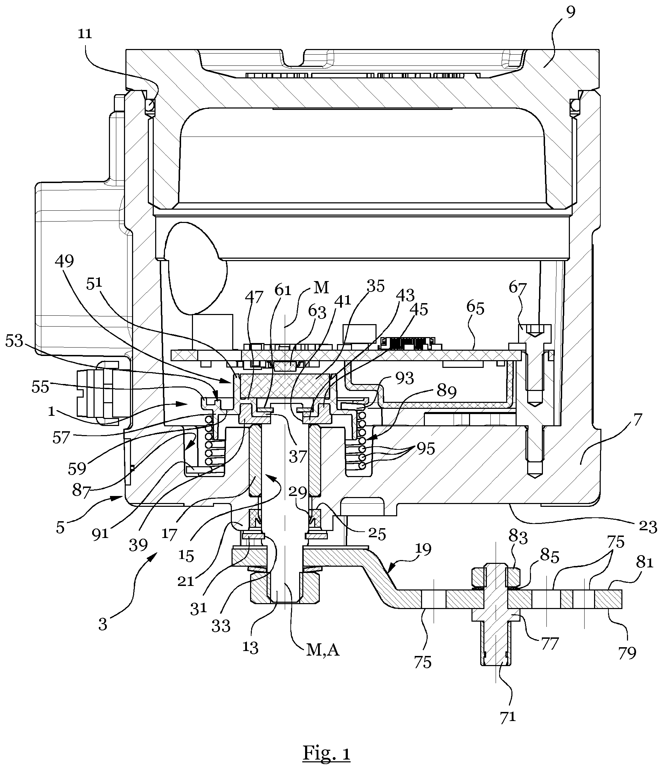

In der in Fig. 1 dargestellten Querschnittsansicht einer erfindungsgemäßen Stellarmaturpositionserfassungseinrichtung 3 weist die Stellarmaturpositionserfassungseinrichtung 3 ein Gehäuse 5 auf, welches mehrteilig ausgebildet ist und ein unteres Basisteil 7 sowie ein oberes Deckelteil 9 besitzt. Das Deckelteil 9 schließt das Basisteil 7 abdichtend ab, wobei ein zusätzliches Abdichtelement, wie ein Dichtring 11, zwischen Basisteil 7 und Deckelteil 9 vorgesehen ist. In dem Gehäuse 5 bzw. dem Basisteil 7 ist eine Welle 13 drehbeweglich gelagert. Die Welle 13 kann sich demnach um eine Drehachse A, die insbesondere eine Mittelachse M der Welle 13 darstellt, rotieren und ist in Richtung der Drehachse A axial gesichert. In der folgenden Beschreibung wird diese Richtung auch als Axialrichtung bezeichnet. Demnach ist die Welle 13 axial bezüglich des Bodenteils 7 gesichert bzw. dessen Position in Axialrichtung A bezüglich des Basisteils 7 festgelegt. Das Basisteil 7 besitzt eine Durchgangsbohrung 15, in der die Welle 13 angeordnet ist. Dabei ist die Welle 13 derart in der Durchgangsöffnung 15 angeordnet, dass die Welle 13 in Axialrichtung A über eine diesbezügliche Abmessung des Basisteils 7 hervorsteht. Wenigstens axialabschnittsweise ist die Welle 13 von einer Führung 17 umgeben, die ein reibungs- und verschleißarmes Rotieren der Welle 13 bezüglich des Gehäusebasisteils 7 zulässt. Die Führung 17 ist beispielsweise als hohlzylindrische Hülse ausgebildet. Außerhalb des Stellarmaturpositionserfassungseinrichtungsgehäuses 5, also unterhalb des Basisteils 7 gemäß Fig. 1, ist die Welle 13 drehfest mit einem Hebelarm 19 verbunden, auf den weiter unten im Detail eingegangen wird. Das Basisteil 7 weist einen umlaufenden Eingangsstutzen 21 an einer Unterseite 23 des Basisteils 7 auf, welcher die Durchgangsöffnung 15 umgibt. Dabei ist der durch den Stutzen 21 festgelegte Innendurchmesser größer bemessen als der Innendurchmesser der Durchgangsöffnung 15, sodass sich ein Radialabsatz 25 am Gehäusebasisteil 7 ergibt. In dem Zwischenraum zwischen Welle 13 und Stutzen 21 ist eine Dichtung 27 eingesetzt, welche beispielsweise einen Spannarm 29 besitzen kann, der sich elastisch deformieren und gegen eine Umfangsfläche der Welle 13 andrücken kann. In Axialrichtung A schließt an den Stutzen 21 ein Axial-Sicherungsring 31 an, der in eine in der Welle 13 vorgesehene umlaufende Aussparung 33 eingerastet und darin eingesetzt ist.

Innerhalb des Gehäuses 5 der Stellarmaturpositionserfassungseinrichtung 1, also oberhalb des Gehäusebasisteils 7 gemäß Fig. 1, befindet sich ein erfindungsgemäßer Halter 1, in dem ein Magnet 35 aufgenommen ist. Bei dem Magnet 35 handelt es sich beispielsweise um einen Permanentmagnet, welcher als Stabmagnet ausgebildet ist. Der Halter 1 besitzt einen Befestigungsabschnitt 37, der im Wesentlichen als Ringflansch ausgebildet ist und derart bezüglich eines Durchmessers der Welle 13 dimensioniert ist, dass der Halter 1 mittels des Befestigungsabschnitts 37 in Axialrichtung A auf die Welle 13 aufgeschoben werden kann und vorzugsweise mittels einer Presspassung zwischen Befestigungsabschnitt 37 und Welle 13 an der Welle 13 befestigt ist. Der Halter 1 ist außerdem drehfest an der Welle 13 befestigt, sodass eine Wellenrotationsbewegung in eine Halterrotationsbewegung übertragen wird. Mit anderen Worten rotiert der Halter 1 mit der Welle 13 mit. Zur Erhöhung des übertragbaren Drehmoments zwischen Welle 13 und Halter 1 ist, wie aus Fig. 1 ersichtlich, ein gelochtes Verstärkungsblech 39 an der Welle 13 und dem Halter 1 angeordnet. Das Verstärkungsblech 39 besitzt dabei ein ebenfalls bezüglich des Außendurchmessers der Welle 13 formangepasstes Loch 41 sowie eine sich von einem Boden 43 des Verstärkungsblechs 39 im Wesentlichen in Axialrichtung A weg erstreckende Wand 45. Die Wand 45, die auch als Stützwand bezeichnet werden kann, ragt in eine sich zwischen dem Befestigungsabschnitt 37 und einem in den Befestigungsabschnitt 37 mündenden Aufnahmeboden 47 ergebende Stufe hervor, um den Halter 1 zur zusätzlichen Drehmomentübertagung abzustützen.

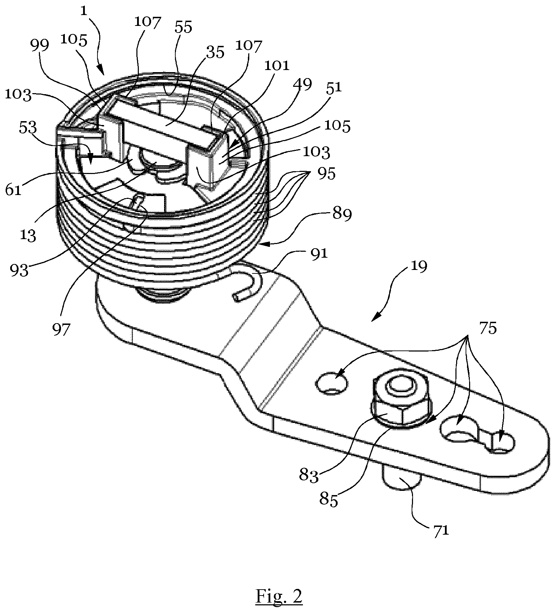

Der Aufnahmeboden 47 dient zur Aufnahme bzw. Auflage des Magneten 35. Wie es in Fig. 1 abgebildet ist, liegt der Magnet 35 auf dem Aufnahmeboden 47 auf. Der Aufnahmeboden 47 ist Teil der Aufnahme 49 zum vorzugsweise verklemmenden Aufnehmen des Magneten 35. An den Aufnahmeboden 47 schließt eine Aufnahmewand 51 an, welche näher in Bezug auf Fig. 2 beschreiben wird.

An die Aufnahme 49 schließt ein Stützabschnitt 53 an, der beispielsweise eine zepterartige Gestalt besitzt. Der Stützabschnitt besitzt einen umlaufenden, äußeren Kragen 55, einen daran anschließenden Führungsschenkel 57, der ebenfalls umlaufend ausgebildet sein kann, und einen sich im Wesentlichen senkrecht zur Axialrichtung A erstreckenden Boden 59. Der erfindungsgemäße Halter ist beispielsweise aus Kunststoff und vorzugsweise mittels eines Spritzgussverfahrens aus einem Stück hergestellt. Auf den Befestigungsabschnitt 37 ist eine Axial-Sicherung 61 zur zusätzlichen axialen Fixierung des Halters 1 auf der Welle 13 aufgesetzt.

Dem Magnet 35 gegenüberliegend ist ein magnetempfindlicher Drehwinkelsensor 63 an dem Gehäuse 5 angeordnet. Der Drehwinkelsensor 63 ist gemäß Fig. 1 in einem geringen Abstand, insbesondere Axialabstand, bezüglich des Magneten 35 und derart mittig in Bezug auf den Magneten 35 angeordnet, dass die jeweiligen Mittelachsen M koaxial zueinander orientiert sind. Dazu weist das Gehäuse 5 einen sich im Wesentlichen senkrecht zur Axialrichtung erstreckenden Flansch 65 auf, der stationär an dem Gehäuse 5 montiert ist, beispielsweise mittels einer Schraube 67, und an dem weitere Komponenten, auf die nicht näher im Detail eingegangen wird, zum Erfassen und Ableiten der Stellarmaturposition angeordnet sind. Für die hier vorliegende Erfindung wesentlich ist allerdings, dass der Magnet 35 sich samt Halter 1 um seine Mittelachse M drehen kann und damit eine Relativ-Rotationsbewegung bezüglich des magnetempfindlichen Drehwinkelsensors 63 durchführen kann. Eine Abmessung senkrecht zur Axialrichtung A des Magneten 35 ist dabei deutlich größer dimensioniert als die entsprechende Abmessung der magnetempfindlichen Sensoreinrichtung 63. Auch die Abmessung in Axialrichtung A des Magneten 35 ist größer dimensioniert als die entsprechende Abmessung des magnetempfindlichen Drehwinkelsensors 63.

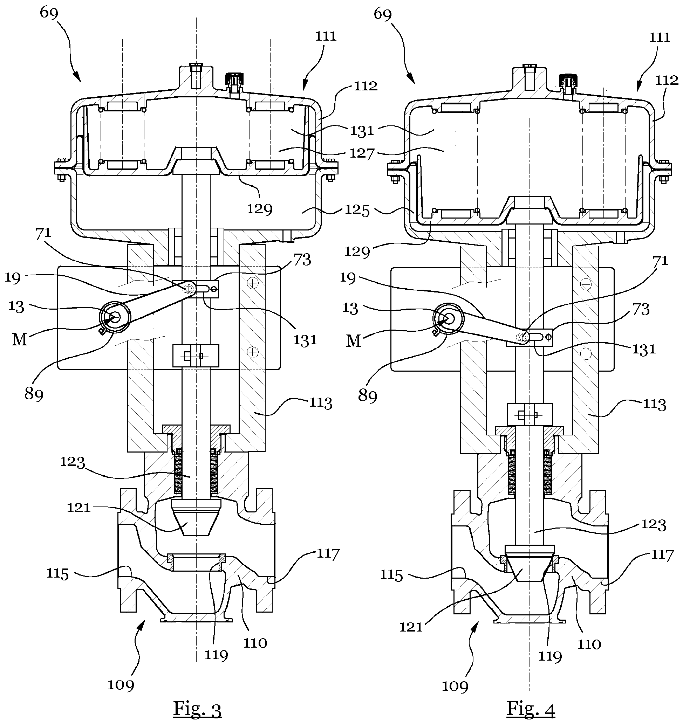

Der drehfest mit der Welle 13 verbundene Hebelarm 19 ist derart an die Stellarmatur 69 (Fig. 3, 4) gekoppelt, dass eine Stellarmaturhubbewegung durch den Hebelarm 19 in eine Rotationsbewegung der Welle 13 übertragen werden kann. Dazu besitzt der Hebelarm 19 einen an unterschiedlichen Stellen entlang des Hebelarms 19 positionierbaren Stift 71, welcher mit einer an der Stellarmatur 69, vorzugsweise einer Stellstange 123 der Stellarmatur 69, befestigten Kulisse 73 (Fig. 3, 4) kooperieren kann, um die Hubbewegung der Stellarmatur 69 in eine Drehbewegung der Welle 13 zu übersetzen. Der Stift 71 ist dabei drehbeweglich in einer in dem Hebelarm 19 vorgesehen Durchgangsöffnung 75 gelagert, wobei mehrere solcher Durchgangsöffnungen 75 entlang des Hebelarms 19 bereit gestellt sind, um die unterschiedlichen Positionen des Stiftes 71 an dem Hebelarm 19 zu ermöglichen. Der Stift 71, der auch als Andrückrolle bezeichnet werden kann, rollt bei einer Stellarmaturhubbewegung an der Kulisse 73 ab. Um den Stift 71 an dem Hebelarm 19 zu befestigen, weist der Stift 71 einen sich senkrecht zur Erstreckungsrichtung des Stifts 71 erstreckenden Ringflansch 77 auf, der eine Unterseite 79 des Hebelarms 19 kontaktiert, und eine auf einer Oberseite 81 des Hebelarms 19 vorzugsweise aufgeschraubte Sicherungsmutter 83, die mit einer Beilagscheibe 85 zusammenwirken kann.

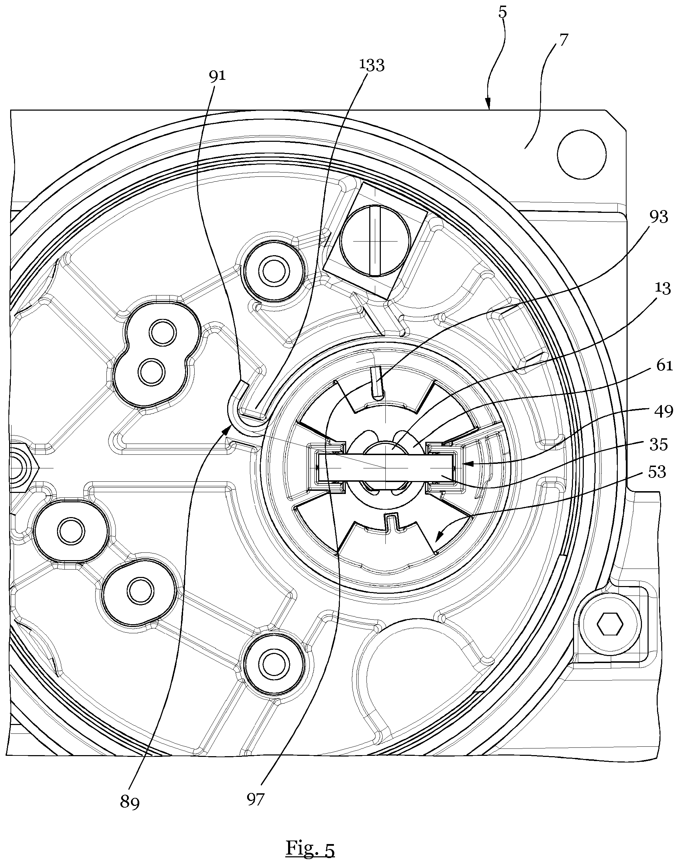

Bezugnehmend auf Fig. 1 weist das Gehäuse 5 in dem Gehäusebasisteil 7 einen um die Welle 13 umlaufenden ringförmigen Kanal 87 auf. Dieser dient dazu, wenigstens teilweise den Führungsschenkel 57 zu empfangen und ebenfalls wenigstens teilweise eine die Welle 13 umlaufend umgebende Drehfeder 89. Erfindungsgemäß stützt sich die Drehfeder 89 zum Einen an dem Gehäuse 5 und zum Anderen an dem Halter 1 ab. Die Abstützung am Halter 1 wird in Bezug auf Fig. 2 näher erläutert, die Abstützung am Gehäuse 5 in Bezug auf Fig. 5. Die Drehfeder 89 besitzt zwei Drehfederenden 91, 93, welche gemäß Fig. 2 eine Hakenform zum verhakenden Abstützen jeweils an dem Gehäuse 5 bzw. dem Halter 1 besitzen. In Fig. 1 ist die Drehfeder 89 mittels der einzelnen Drehfederwindungen 95 gekennzeichnet, von denen beispielsweise 3, wie es in Fig. 1 abgebildet ist, sich an dem Führungsschenkel 57 des Halters 1 abstützen können. Bei einer Stellarmaturhubbewegung, welche in eine Wellenrotationsbewegung mittels des Hebelarms 19 umgesetzt wird, baut sich aufgrund der Anbringung der Drehfeder 89 an dem stationären Gehäuse 5 und an dem sich mitdrehenden Halter 1 eine Drehfederkraft auf, die mittels der dadurch hervorgerufenen Federvorspannung auf die Welle 13 eine deutlich genauere Positionserfassung der Stellarmatur 69 bei möglichst geringer Verzögerung gewährleistet. Des Weiteren erlaubt die erfindungsgemäße Ausgestaltung der erfindungsgemäßen Stellarmaturpositionserfassungseinrichtung 3 sowie des erfindungsgemäßen Halters 1 eine konstruktiv einfach umzusetzende Lösung, bei der außerdem Axialbauraum eingespart ist.

Bezugnehmend auf Fig. 2 ist die Abstützung der Drehfeder 89 mittels des hakenförmigen Drehfederendes 93 an dem Halter 1 ersichtlich. Dabei ist in Fig. 2 zur leichteren Erkennbarkeit lediglich der Hebelarm 19 mit dem erfindungsgemäßen Halter 1, in dem ein Stabmagnet 35 aufgenommen ist, und der einseitig mittels des einen Drehfederendes 93 an dem Halter 1 verhakend befestigten Drehfeder 89 abgebildet. Das andere Drehfederende 91, welches an dem Gehäuse 5 verhakend angebracht wird, was in Bezug auf Fig. 5 beschrieben wird, ist frei sichtbar, da das entsprechende Gehäuseteil nicht dargestellt ist. An dem Stützabschnitt 53 des Halters 1 ist eine Aussparung 97 vorgesehen, in die das Drehfederende 93 in Axialrichtung A von unten her eingreifen kann, um sich an dem Halter abzustützen und in diesem verhakend aufgenommen zu sein. Bei einer Wellenrotationsbewegung behält das halternahe Drehfederende 93 seine Position infolge der verhakenden Befestigung an dem Halter 1, während sich die restlichen Drehfederbereiche, insbesondere sämtliche Drehfederwindungen 95, wenigstens teilweise um die Welle 13 rotieren, wodurch sich die Drehfederkraft aufbaut.

Ebenfalls in Fig. 2 abgebildet, ist die Aufnahme 19, in welcher der Magnet 35 verklemmend gehalten ist. Die Aufnahme 49 ist dabei zweigeteilt ausgeführt und besitzt zwei deckungsgleiche, gespiegelt zueinander angeordnete Aufnahmeteilabschnitte 99, 101. Die Aufnahmeteilabschnitte 99, 101 sind im Wesentlichen durch eine Wand 51, die aus drei, paarweise senkrecht zueinander orientierten Wandabschnitten 103, 105, 107 und durch den jeweiligen Boden 47 der Aufnahme 49 gebildet sind.

In Bezug auf die Figuren 3 und 4 wird die Funktionsweise einer erfindungsgemäßen Stellarmatur 69 näher beschrieben. Das Feldgerät 69 besitzt ein Stellventil 109, einen vorzugsweise pneumatischen Stellantrieb 111 und ein das Stellventil 109 und den Stellantrieb 111 ortsfest tragendes Joch 113. Das Stellventil 109 ist eine in ein Rohrsystem eine prozesstechnischen Anlage intergiert, wobei der Rohransatz für die Strömungseingangsleitung mit der Bezugsziffer 115 versehen ist und eine Strömungsausgangsleitung mit der Bezugsziffer 117. Im Inneren eines Gehäuses 110 des Stellventils 109 ist ein Ventilsitz 119 ortsfest befestigt, welcher mit einem Ventilglied 121 kooperiert, das über eine Stellstange 123 von dem pneumatischen Antrieb 111 betätigt wird. Die Stellstange 123 erstreckt sich durch eine Öffnung im oberen Teil des Stellventilgehäuses 110 längs des Jochs 113 in eine Durchführung im Gehäuse 112 des Stellantriebs 11 und ist mit einer die beiden Arbeitskammern 125, 127 des pneumatischen Stellantriebs 111 trennenden beispielsweise als Membran ausgebildeten Trennfläche 129 fest verbunden.

Der Stellantrieb 111 hat eine Arbeitskammer 125 und eine mit Druckfedern 131 belegte Rückstellkammer 127. Die pneumatische Arbeitskammer 125 ist pneumatisch mit einem Stellungsregler (nicht dargestellt) verbunden, der an eine Druckluftquelle (nicht dargestellt) von etwa 6 bar angeschlossen sein kann. Der Stellungsregler, der beispielsweise in der erfindungsgemäßen Stellarmaturpositionserfassungseinrichtung angeordnet und intergiert sein kann, ist derart mit der erfindungsgemäßen Stellarmaturpositionserfassungseinrichtung 3 verknüpft, das in Folge einer erfassten Stellarmaturposition ein Stellungsregelungsbefehl generiert werden kann, der über den Stellungsregler an den Stellantrieb 111 abgegeben werden kann, um die Stellarmatur 69 zu verfahren.

Wie bereits in Bezug auf Fig.1 beschrieben wurde, ist die Kulisse 73 fest an der Stellstange 123 montiert, sodass die Kulisse einer Stellstangenbewegung folgt. An der Kulisse 73 ist der Hebelarm 19 mittels des Stifts 71 drehbeweglich gelagert, wobei der Stift 71 in einem in der Kulisse 73 eingebrachten Langloch 131 in Folge einer Stellstangenhubbewegung abrollen kann, sodass eine Rotation des Hebelarms 19 einhergeht. Die Rotation des Hebelarms 19 erfolgt dabei im Wesentlichen um die in den Fig. 3 und 4 lediglich schematisch dargestellte Welle 13 bzw. dessen Mittelachse M. Des Weiteren ist in den Fig. 3 und 4 die Drehfeder 89 schematisch dargestellt, welche in Folge einer Stellstangenhubbewegung, die mittels des Hebelarms 19 in eine Wellenrotationsbewegung übersetzt wird, eine Drehfederkraft aufbaut.

In der Draufsicht auf einen Ausschnitt des Gehäuses 5, insbesondere des Gehäusebasisteils 7, gemäß Fig. 5 ist insbesondere die Abstützung der Drehfeder 89 mittels des gehäuseseitigen Drehfederendes 91, das als Haken ausgebildet ist, verdeutlicht. An dem Gehäuse 5 ist ein entsprechend geformter Vorsprung 133 derart vorgesehen und dimensioniert, dass das hakenförmige Drehfederende 91 sich an dem Vorsprung 133 abstützen und diesen umgreifen kann. Durch das Umgreifen des gehäusefesten, stationären Vorsprungs 133 durch das Drehfederende 91 behält das Drehfederende 91 bei einer Stellstangenhubbewegung, die zu einer Wellenrotationsbewegung führt, seine Position, wodurch sich der restliche Bereich der Drehfeder 89, insbesondere die Drehfederwindungen 95, um die Wellendrehachse rotieren und damit eine Drehfederkraft zwischen den beiden Drehfederenden 91, 93 aufgebaut wird. In Bezug auf die Unterbringung des Magneten in dem Halter 1 sowie in Bezug auf die halterseitige Abstützung der Drehfeder 89 an dem Halter 1 wird auf die vorherigen Ausführungen verwiesen.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Halter
- 3: Stellarmaturpositionserfassungseinrichtung
- 5: Gehäuse
- 7: Basisteil
- 9: Deckelteil
- 11: Dichtring
- 13: Welle
- 15: Durchgangsöffnung
- 17: Führung
- 19: Hebelarm
- 21: Stutzen
- 23: Unterseite
- 25: Radialabsatz
- 27: Dichtung
- 29: Spannarm
- 31: Axial-Sicherungsring
- 33: Aussparung
- 35: Magnet
- 37: Befestigungsabschnitt
- 39: Verstärkungsblech
- 41: Loch
- 43: Boden
- 45: Wand
- 47: Aufnahmeboden
- 49: Aufnahme
- 51: Aufnahmewand
- 53: Stützabschnitt
- 55: Kragen
- 57: Führungsschenkel
- 59: Boden
- 61: Axialsicherung
- 63: Drehwinkelsensor
- 65: Flansch
- 67: Schraube
- 69: Stellarmatur
- 71: Stift
- 73: Kulisse
- 75: Durchgangsöffnung
- 77: Flansch
- 79: Unterseite
- 81: Oberseite
- 83: Sicherungsmutter
- 85: Beilagscheibe
- 87: Kanal
- 89: Drehfeder
- 91, 93: Drehfederende
- 95: Drehfederwindung
- 97: Aussparung
- 99, 101: Aufnahmeteilabschnitt
- 103,105,107: Wandabschnitt
- 109: Stellventil
- 110: Gehäuse
- 111: Stellantrieb
- 112: Gehäuse
- 113: Joch
- 115: Strömungseingangsleitung
- 117: Strömungsausgangsleitung
- 119: Ventilsitz
- 121: Ventilglied
- 123: Stellstange
- 125, 127: Arbeitskammer
- 129: Trennfläche
- 131: Druckfeder
- 133: Vorsprung

## Patentansprüche

1. Stellarmatur, insbesondere Feldgerät, zum Stellen einer Prozessfluidströmung in einer prozesstechnischen Anlage, wie einer chemischen Anlage, einer Lebensmittel verarbeitenden Anlage, eines Kraftwerks oder dergleichen, mit einem Stellventil (109), einem das Stellventil (109) betätigenden, pneumatischen Stellantrieb (111) und einer Stellarmaturpositionserfassungseinrichtung (3) umfassend:
- ein Gehäuse;
- eine drehbeweglich in dem Gehäuse gelagerte Welle, die eine Drehachse definiert; und
- einen drehfest mit der Welle (13) verbundenen Hebelarm, der derart an die Stellarmatur gekoppelt ist, dass eine Stellarmaturhubbewegung durch den Hebelarm (19) in eine Wellenrotationsbewegung übertragbar ist, wobei ein an der Welle drehfest angeordneter Halter (1) vorgesehen ist, an dem ein Magnet (35) vorzugsweise verklemmend gehalten ist, wobei sich eine parallel zu der Wellendrehachse orientierte Drehfeder (89) an dem Gehäuse und dem Halter (1) insbesondere verhakend abstützt, um eine Drehfederkraft bei einer Wellenrotationsbewegung aufzubauen.

2. Stellarmatur nach Anspruch 1, wobei der Halter (1) umfasst:
- eine Aufnahme (49) zum insbesondere verklemmenden Halten des Magneten;
- einen mit der Aufnahme (49) verbundenen Befestigungsabschnitt (37) zum drehfesten Befestigen des Halters an der Welle; und
- einen mit der Aufnahme (49) und dem Befestigungsabschnitt (37) verbundenen Stützabschnitt (53) zum insbesondere verhakenden Abstützen der Drehfeder, um eine Drehfederkraft bei einer Wellenrotationsbewegung aufzubauen.

3. Stellarmatur nach Anspruch 2, wobei der Magnet (35) und die Aufnahme (49) formkomplementär zueinander ausgebildet sind, wobei insbesondere der Magnet (35) form-, kraft- und/oder stoffschlüssig in der Aufnahme (49) aufnehmbar, vorzugsweise gehalten, ist.

4. Stellarmatur nach Anspruch 2 oder 3, wobei der Magnet (35) derart bezüglich der Aufnahme (49) überdimensioniert ist, dass sich eine Presspassung zwischen Magnet (35) und Aufnahme (49) einstellt.

5. Stellarmatur nach einem der Ansprüche 2 bis 4, wobei der Magnet (35) derart in der Aufnahme (49) gehalten ist, dass die Wellendrehachse vorzugsweise mittig durch den Magneten verläuft und/oder der Magnet (35) in Richtung der Wellendrehachse in einem Abstand zu der Welle, insbesondere einer Stirnfläche der Welle, angeordnet ist, wobei insbesondere der Magnet (35) derart bemessen ist, dass er über eine Querschnittsabmessung der Welle (13) hervorsteht.

6. Stellarmatur nach einem der Ansprüche 2 bis 5, wobei der Magnet (35) demontierbar in der Aufnahme (49) aufnehmbar, vorzgusweise gehalten, ist, wobei insbesondere der Magnet (35) mittels einer Verrastung in der Aufnahme (49) gehalten ist, wobei insbesondere der Magnet (35) wenigstens ein Verrastungselement, wie einen Rastvorsprung und/oder eine Rastaussparung, aufweist und die Aufnahme (49) wenigstens ein dem Verrastungselement des Magenten zugeordnetes Verrastungselement, wie einen Rastvorsprung und/oder eine Rastaussparung, zum verrastenden Befestigen des Magneten in der Aufnahme (49) aufweist.

7. Stellarmatur nach einem der Ansprüche 2 bis 6, wobei der Befestigungsabschnitt (37) durch einen umlaufenden, sich in einem Winkel, vorzugsweise im Bereich von 85° bis 95°, insbesondere 90°, zur Drehachse erstreckenden Ringflansch gebildet ist, wobei insbesondere der Befestigungsabschnitt (37) derart bezüglich eines Wellendurchmessers formangepasst ist, dass der Befestigungsabschnitt (37) form- und/oder kraftschlüssig, insbesondere mittels einer Presspassung, an der Welle (13) befestigt ist.

8. Stellarmatur nach einem der Ansprüche 2 bis 7, wobei der Halter (1) mittels eines Befestigungsteils, wie eines Sicherungsrings, einer Schraube, einer Schweißnaht oder dergleichen, mit der Welle (13) verbunden ist, wobei insbesondere das Befestigungsteil den Befestigungsabschnitt (37) drehmomentübertragungsgemäß mit der Welle (13) verbindet.

9. Stellarmatur nach einem der Ansprüche 2 bis 8, wobei der Stützabschnitt (53) derart geformt ist, dass er von einem insbesondere haken- oder schlaufenförmigen Ende der Drehfeder (89) umgreifbar ist, wobei insbesondere der Stützabschnitt (53) einen Vorsprung oder eine Aussparung aufweist, an dem/an der sich das Drehfederende abstützen kann.

10. Stellarmatur nach einem der Ansprüche 2 bis 9, wobei der Stützabschnitt (53) einen sich im Wesentlichen in Richtung der Drehachse erstreckenden, vorzugsweise umlaufenden, Führungsschenkel zum Abstützen wenigstens eines Bereichs der Drehfeder (89) aufweist, wobei insbesondere der Führungsschenkel unmittelbar an den Vorsprung oder die Aussparung anschließt.

11. Stellarmatur nach einem der vorstehenden Ansprüche, wobei der Halter (1) aus Kunststoff vorzugsweise aus einem Stück, insbesondere mittels eines Spritzgussverfahrens, hergestellt ist.

12. Stellarmatur nach einem der vorstehenden Ansprüche, wobei die Stellarmaturpositionserfassungseinrichtung (3) einen am Gehäuse angeordneten magnetempfindlichen Drehwinkelsensor, wie ein Encoder, zum Erfassen der Wellenrotationsbewegung umfasst.

13. Stellarmatur nach Anspruch 12, wobei der magnetempfindliche Drehwinkelsensor derart dem Magnet (35) zugeordnet ist, dass er bei einer Wellenrotationsbewegung eine Änderung des Magnetfeldes detektiert.

14. Stellarmatur nach einem der Ansprüche 11 bis 13, wobei der Magnet (35) derart in dem Halter (1) gehalten ist, dass die Wellendrehachse vorzugsweise mittig durch den Magneten verläuft, und/oder der Magnet (35) derart bemessen ist, dass er über eine Querschnittsabmessung der Welle (13) hervorsteht, und/oder eine Mittelachse des magnetempfindlichen Drehwinkelsensors und eine Mittelachse des Magneten zueinander parallel, vorzugsweise koaxial, orientiert sind.

15. Stellarmatur nach einem der Ansprüche 11 bis 14, wobei die Drehfeder (89) wenigstens ein haken- oder schlaufenförmiges Ende aufweist und in dem Halter (1) und/oder dem Gehäuse jeweils wenigstens ein Vorsprung und/oder eine Aussparung ausgebildet ist, wobei das wenigstens eine haken- oder schlaufenförmige Drehfederende den wenigstens einen Vorsprung und/oder die wenigstens eine Aussparung in dem Halter (1) und/oder dem Gehäuse zum Abstützen der Drehfeder (89) umgreift.

## Claims

1. Control armature, in particular field device, for controlling a process fluid flow in a process plant, such as a chemical plant, a food processing plant, a power plant or the like, with a control valve (109), a pneumatic actuator (111) operating the control valve (109) and a control armature position detection device (3) comprising:
- a housing;
- a shaft rotatably supported in the housing and defining a rotation axis; and
- a lever arm non-rotatably connected to the shaft (13) and coupled to the control armature in such a way that a control armature stroke movement can be transmitted by the lever arm (19) into a shaft rotation movement,
wherein a holder (1) is provided which is non-rotatably arranged on the shaft, on which a magnet (35) is held, preferably clampingly, wherein a torsion spring (89) oriented parallel to the shaft rotation axis is supported on the housing and the holder (1), in particular interlockingly, to build up a torsion spring force during a shaft rotational movement.

2. Control armature according to claim 1, wherein the holder (1) comprises:
- a receptable (49) for particularly clampingly holding the magnet;
- a mounting portion (37) connected to the receptable (49) for non-rotatably mounting the holder to the shaft; and
- a supporting portion (53) connected to the receptable (49) and the mounting portion (37) for particularly interlockingly supporting the torsion spring to build up a torsion spring force during a shaft rotational movement.

3. Control armature according to claim 2, wherein the magnet (35) and the receptable (49) are designed to be form-complementary to one another, wherein in particular the magnet (35) can be received, preferably held, in the receptable (49) in a form-, force- und/or material fitting member.

4. Control armature according to claim 2 or 3, wherein the magnet (35) is overdimensioned with respect to the receptable (49) in such a way that a press fit between magnet (35) and receptable (49) arises.

5. Control armature according to one of claims 2 to 4, wherein the magnet (35) is held in the receptable (49) in such a way that the shaft rotation axis runs preferably centrally through the magnet and/or the magnet (35) is arranged in direction of the shaft rotation axis at a distance to the shaft, in particular an end face of the shaft, wherein in particular the magnet (35) is dimensioned in such a way that it projects beyond a cross sectional dimension of the shaft (13).

6. Control armature according to one of claims 2 to 5, wherein the magnet (35) is demountably receivable, preferably held, in the receptable (49),wherein in particular the magnet (35) is held in the receptable (49) by means of a latching, wherein in particular the magnet (35) comprises at least one latching member, such as a latching projection and/or a latching recess, and the receptable (49) comprises at least one latching element, such as a latching projection and/or a latching recess, assigned to the latching element of the magnet, to interlockingly attach the magnet in the receptable (49).

7. Control armature according to one of claims 2 to 6, wherein the mounting portion (37) is formed by a circumferential annular flange extending at an angle, preferably in the range of 85° to 95°, in particular 90°, to the rotation axis, wherein in particular the mounting portion (37) is adapted in shape with respect to a shaft diameter in such a way that the mounting portion (37) is attached to the shaft (13) in a form- and/or force-fitting manner, in particular by means of a press fit.

8. Control armature according to one of claims 2 to 7, wherein the holder (1) is connected to the shaft (13) by means of a mounting part, such as a retaining ring, a screw, a weld seam or the like, wherein in particular the mounting part connects the mounting portion (37) to the shaft (13) in a torque-transmitting manner.

9. Control armature according to one of claims 2 to 8, wherein the supporting portion (53) is shaped in such a way that it can be encompassed by a particularly hook- or loop-shaped end of the torsion spring (89), wherein in particular the supporting portion (53) comprises a projection or a recess, on which the torsion spring end can be supported.

10. Control armature according to one of claims 2 to 9, wherein the supporting portion (53) comprises a preferably circumferential guide leg extending substantially in the direction of the rotation axis for supporting at least a section of the torsion spring (89), wherein in particular the guide leg directly adjoins the projection or the recess.

11. Control armature according to one of the preceding claims, wherein the holder (1) is produced of plastic, preferably in one piece, in particular by means of an injection molding process.

12. Control armature according to one of the preceding claims, wherein the control armature position detection device (3) comprises a magnet-sensitive rotation angle sensor, such as an encoder, arranged on the housing, for detecting the shaft rotational movement.

13. Control armature according to claim 12, wherein the magnet-sensitive rotation angle sensor is assigned to the magnet (35) in such a way that it detects a change in the magnetic field during a shaft rotational movement.

14. Control armature according to one of claims 11 to 13, wherein the magnet (35) is held in the holder (1) in such a way that the shaft rotation axis runs preferably centrally through the magnet, and/or the magnet (35) is dimensioned in such a way that it projects beyond a cross sectional dimension of the shaft (13), and/or a middle axis of the magnet-sensitive rotation angle sensor and a middle axis of the magnet are oriented parallel, preferably coaxial, to one another.

15. Control armature according to one of claims 11 to 14, wherein the torsion spring (89) comprises at least one hook- or loop-shaped end and at least one projection and/or recess is formed in the holder (1) and/or the housing, respectively, wherein the at least one hook- or loop-shaped torsion spring end encompasses the at least one projection and/or the at least one recess in the holder (1) and/or the housing for supporting the torsion spring (89).

## Revendications

1. Vanne de réglage, notamment appareil de terrain, destinée à régler un écoulement de fluide de procédé dans une installation en génie des procédés, telle qu'une installation chimique, une installation de traitement de produits alimentaires, une centrale électrique ou analogues, pourvue d'une soupape de réglage (109), d'un servomoteur (111) pneumatique, actionnant la soupape de réglage (109) et d'un système de détection de position (3) de la vanne de réglage, comprenant :
- un corps ;
- un arbre, logé en étant déplaçable en rotation dans le corps, qui définit un axe de rotation ; et
- un bras de levier, relié de manière solidaire en rotation avec l'arbre (13), qui est couplé avec la vanne de réglage de telle sorte qu'un déplacement en course de la vanne de réglage par le bras de levier (19) soit convertible en un déplacement en rotation de l'arbre,
étant prévu un support (1) maintenu sur l'arbre de manière solidaire en rotation, sur lequel un aimant (35) est maintenu de préférence par serrage, un ressort de torsion (89) orienté à la parallèle de l'axe de rotation de l'arbre s'appuyant notamment en s'accrochant sur le corps et sur le support (1), pour construire une force de ressort de torsion lors d'un mouvement en rotation de l'arbre.

2. Vanne de réglage selon la revendication 1, le support (1) comprenant :
- un logement (49), destiné notamment à maintenir l'aimant en le coinçant ;
- une partie de fixation (37) reliée avec le logement (49), destinée à fixer de manière solidaire en rotation le support sur l'arbre ; et
- une partie de soutien (53), reliée avec le logement (49) et la partie de fixation (37), destinée à soutenir notamment en l'accrochant le ressort de torsion, pour construire une force de ressort de torsion lors d'un mouvement en rotation de l'arbre.

3. Vanne de réglage selon la revendication 2, l'aimant (35) et le logement (49) étant conçus avec une complémentarité de forme mutuelle, notamment l'aimant (35) étant susceptible d'être logé, de préférence maintenu par complémentarité de forme, par complémentarité de force et / ou par conjugaison de matière dans le logement (49).

4. Vanne de réglage selon la revendication 2 ou 3, l'aimant (35) étant surdimensionné par rapport au logement (49), de telle sorte qu'il s'établisse un ajustement serré entre l'aimant (35) et le logement (49).

5. Vanne de réglage selon l'une quelconque des revendications 2 à 4, l'aimant (35) étant maintenu dans le logement (49) de telle sorte que l'axe de rotation de l'arbre s'écoule de préférence à travers le centre de l'aimant et / ou qu'en direction de l'axe de rotation de l'arbre, l'aimant (35) soit placé avec un écart par rapport à l'arbre, notamment à une face frontale de l'arbre, notamment l'aimant (35) étant dimensionné de telle sorte qu'il déborde par-dessus une dimension de section transversale de l'arbre (13).

6. Vanne de réglage selon l'une quelconque des revendications 2 à 5, l'aimant (35) étant susceptible d'être logé, de préférence étant maintenu de manière démontable dans le logement (49), notamment l'aimant (35) étant maintenu au moyen d'un enclenchement dans le logement (49), notamment l'aimant (35) comportant au moins un élément d'enclenchement, comme une saillie d'enclenchement et /ou un évidement d'enclenchement, et le logement (49) comportant au moins un élément d'enclenchement associé à l'élément d'enclenchement de l'aimant, comme une saillie d'enclenchement et /ou un évidement d'enclenchement, pour la fixation par enclenchement de l'aimant dans le logement (49).

7. Vanne de réglage selon l'une quelconque des revendications 2 à 6, la partie de fixation (37) étant constituée d'une bride annulaire périphérique, s'étendant sous un angle de préférence de l'ordre de 85 ° à 95 °, notamment de 90° par rapport à l'axe de rotation, notamment la partie de fixation (37) étant adaptée par la forme à un diamètre de l'arbre, de telle sorte que la partie de fixation (37) soit fixée sur l'arbre (13) par complémentarité de forme et /ou par complémentarité de force, notamment au moyen d'un ajustage serré.

8. Vanne de réglage selon l'une quelconque des revendications 2 à 7, le support (1) étant relié avec l'arbre (13) au moyen d'une pièce de fixation, comme une bague de blocage, une vis, une soudure ou analogues, notamment la pièce de fixation reliant la partie de fixation (37) avec l'arbre (13) en transmettant le couple de rotation.

9. Vanne de réglage selon l'une quelconque des revendications 2 à 8, la partie de soutien (53) étant façonnée de sorte à pouvoir être entourée par une extrémité notamment en forme de crochet ou en forme de boucle du ressort de torsion (89), notamment la partie de soutien (53) comportant une saillie ou une encoche, sur laquelle l'extrémité du ressort de torsion peut se soutenir.

10. Vanne de réglage selon l'une quelconque des revendications 2 à 9, la partie de soutien (53) comportant une branche de guidage, de préférence périphérique, s'étendant sensiblement en direction de l'axe de rotation, destinée à soutenir au moins une zone du ressort de torsion (89), notamment la branche de guidage se raccordant directement sur la saillie ou sur l'encoche.

11. Vanne de réglage selon l'une quelconque des revendications précédentes, le support (1) étant fabriqué en une matière plastique, de préférence en monobloc, notamment au moyen d'un procédé de moulage par injection.

12. Vanne de réglage selon l'une quelconque des revendications précédentes, le système de détection de position (3) de la vanne de réglage comprenant un capteur d'angle de rotation magnétosensible, placé sur le corps, tel qu'un encodeur, destiné à détecter le mouvement en rotation de l'arbre.

13. Vanne de réglage selon la revendication 12, le capteur d'angle de rotation magnétosensible étant associé à l'aimant (35) de sorte à détecter une modification du champ magnétique lors d'un mouvement en rotation de l'arbre.

14. Vanne de réglage selon l'une quelconque des revendications 11 à 13, l'aimant (35) étant maintenu dans le support (1) de telle sorte que l'axe de rotation de l'arbre s'écoule de préférence à travers le centre de l'aimant et / ou l'aimant (35) étant dimensionné de sorte à déborder par-dessus une dimension de section transversale de l'arbre (13) et / ou un axe médian du capteur d'angle de rotation magnétosensible et un axe médian de l'aimant étant orientés mutuellement à la parallèle, de préférence de manière coaxiale.

15. Vanne de réglage selon l'une quelconque des revendications 11 à 14, le ressort de torsion (89) comportant au moins une extrémité en forme de crochet ou en forme de boucle et dans le support (1) et /ou dans le corps étant constituée chaque fois au moins une saillie et / ou une encoche, l'extrémité en forme de crochet ou en forme de boucle du ressort de torsion entourant l'au moins une saillie et /ou l'au moins une encoche dans le support (1) et /ou dans le corps, pour soutenir le ressort de torsion (89).
